# FASCICULE DE BREVET EUROPEEN

(11) **EP 2 429 145 B1**
(45) Date de publication et mention de la délivrance du brevet: **12.04.2017**
(21) Numéro de dépôt: 11178854.3
(22) Date de dépôt: 25.08.2011
(51) Int. Cl.: H04L 29/06, H04L 29/12

(54) **Procédé de présentation d'appel dans un réseau IMS et serveur d'application apte à mettre en oeuvre ce procédé**
Rufpräsentationsverfahren in einem IMS-Netzwerk und Anwendungsserver zur Umsetzung dieses Verfahrens
Method for displaying a call in an IMS network and application server suitable for implementing said method

(30) Priorité: 14.09.2010 FR 1057300
(43) Date de publication de la demande: 14.03.2012
(73) Titulaire: Orange, 75015 Paris (FR)
(72) Inventeur: Bouvet, Bertrand, 22700 PERROS-GUIREC (FR)
(74) Mandataire: Delumeau, François Guy

(56) Documents cités:
- EP-A1- 2 086 167
- WO-A1-2009/068113
- WO-A1-2009/143884

## Description

### Arrière plan de l'invention

La présente invention se situe dans le domaine des réseaux de télécommunication et plus précisément dans le contexte des réseaux IMS.

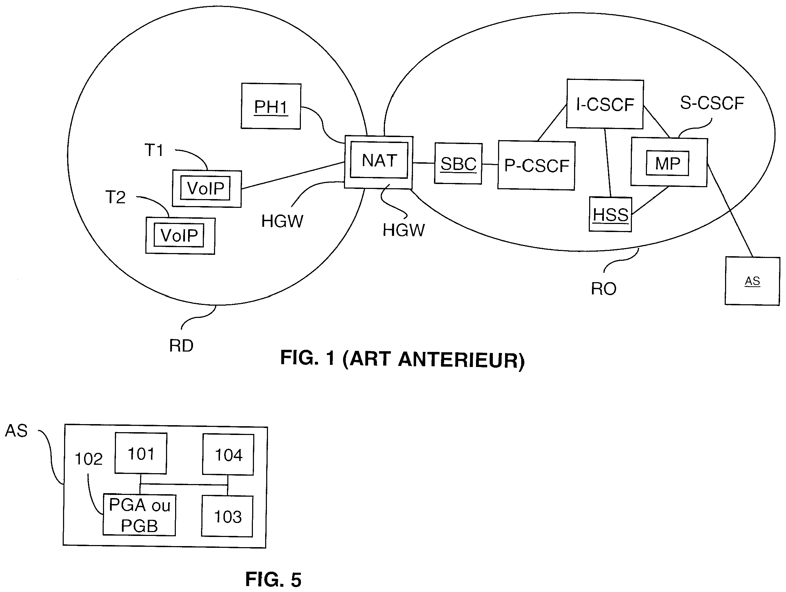

La **figure 1** représente un réseau de télécommunication dans lequel peut s'appliquer l'invention.

Plus précisément, sur cette figure, on a représenté un réseau domestique RD et un réseau opérateur RO de type IMS (IP Multimedia Subsystem) une passerelle domestique HGW réalisant l'interface entre le réseau domestique RD et le réseau opérateur RO.

Cette passerelle domestique HGW incorpore une fonction NAT (Network Address Translation) de traduction d'adresses.

Les architectures IMS pour réseaux fixes ont en particulier été déployées pour la commercialisation d'offres dites "MULTIPLAY" permettant à un utilisateur d'accéder à différents services du réseau IMS, notamment à des services d'accès aux réseaux Internet, de voix sur IP (VoIP) et de télévision sur Internet (IPTV) via une passerelle domestique.

Afin de diversifier leurs offres, les opérateurs de télécommunication proposent des terminaux complémentaires aux téléphones fixes, ces terminaux complémentaires étant équipés d'un logiciel de VoIP utilisant le même identifiant public IMPU que celui de la passerelle domestique et un identifiant privé IMPI pouvant ou non être le même que celui de la passerelle domestique.

Sur cette figure, un téléphone DECT PH1 est connecté derrière la passerelle HGW ; ce téléphone est apte à sonner lorsque la passerelle reçoit un appel entrant.

On a également représenté deux terminaux T1 et T2 équipés d'un logiciel de voix sur IP, seul le terminal T1 étant enregistré en coeur de réseau IMS.

Les terminaux T1 et T2 peuvent être connectés à la passerelle domestique HGW par tout moyen, notamment par une liaison filaire de type Ethernet ou USB ou par une liaison sans fil de type Wifi ou Bluetooth.

Les principales entités d'un réseau IMS sont représentées à la figure 1, et notamment les entités SIP de types P-CSCF (Proxy Call State Control Function), S-CSCF (Serving Call State Control Function) et I-CSCF (Interrogating Call Session Control Function) en charge notamment de la signalisation et du contrôle de session.

On rappelle que pour s'enregistrer en coeur de réseau IMS, un terminal envoie au serveur S-CSCF responsable de la gestion des enregistrements une requête d'enregistrement (requête SIP Register) comportant notamment les deux identifiants IMPU et IMPI précités. Le chapitre 10 du document RFC 3261 de l'IETF définit la procédure d'enregistrement SIP dans les réseaux IMS.

L'IMPU (IP Multimedia Public Identity) autrement appelé AoR (Address of Record) est l'identifiant public associé au terminal, par exemple un numéro de téléphone.

L'IMPI (IP Multimedia Private Identity) permet d'identifier le terminal à proprement parler. Cet identifiant est utilisé pour l'authentification du terminal en coeur du réseau IMS, en combinaison avec un autre paramètre connu sous le nom "SIP PassWord".

L'adresse de contact AoC correspond à l'adresse IP (Internet Protocol) du terminal, son numéro de port et une information représentative du protocole de transport (UDP, TCP, TLS, ...).

Lorsque l'enregistrement d'un terminal d'une identité publique IMPU donnée est accepté, le serveur S-CSCF répond au terminal par l'envoi d'une réponse 200 OK comportant toutes les adresses de contact AoC associées à cette identité publique IMPU et un champ EXPIRES associé à chacune des adresses de contact AoC, ce paramètre EXPIRES définissant la période (typiquement 3600s) entre deux enregistrements consécutifs d'un terminal dans le réseau.

Plusieurs terminaux pouvant comporter la même identité publique IMPU, le document IETF RFC 3261 définit un mécanisme permettant de faire sonner, en cas d'appel entrant destiné à une identité publique IMPU donnée, un ou plusieurs terminaux en priorité parmi tous les terminaux possédant cette même identité publique IMPU enregistrés en coeur IMS.

A cet effet, l'adresse de contact AoC d'un terminal peut comporter un paramètre q constitué par un nombre réel compris entre 0 et 1 (la valeur 1 correspondant à la priorité maximale, la valeur 0 à la priorité minimale), ce paramètre définissant la priorité du terminal en terme d'ordre de présentation d'un appel entrant (fonction de Forking ou de priorisation).

Plus précisément, lorsqu'un appel entrant à destination de l'IMPU est présenté au serveur S-CSCF, un module de priorisation MP de ce serveur fait sonner en parallèle les terminaux de même priorité q, les terminaux ayant une valeur q supérieure sonnant en priorité par rapport aux terminaux ayant une valeur q inférieure.

Sur la figure 1, on a également représenté un serveur d'application téléphonique AS (Application Server) apte à fournir des services téléphoniques de classe 5 Originating (Masquage de l'identité de l'appelant, filtrage d'appels sortants, ....) et Terminating (présentation du numéro appelant, présentation du nom de l'appelant, gestion du double appel via les services Call Waiting/Call Hold/Call retrieve/Call Toggle, renvoi d'appel vers la messagerie ou vers des numéros de tiers sur occupation, sur non réponse, inconditionnel, ....).

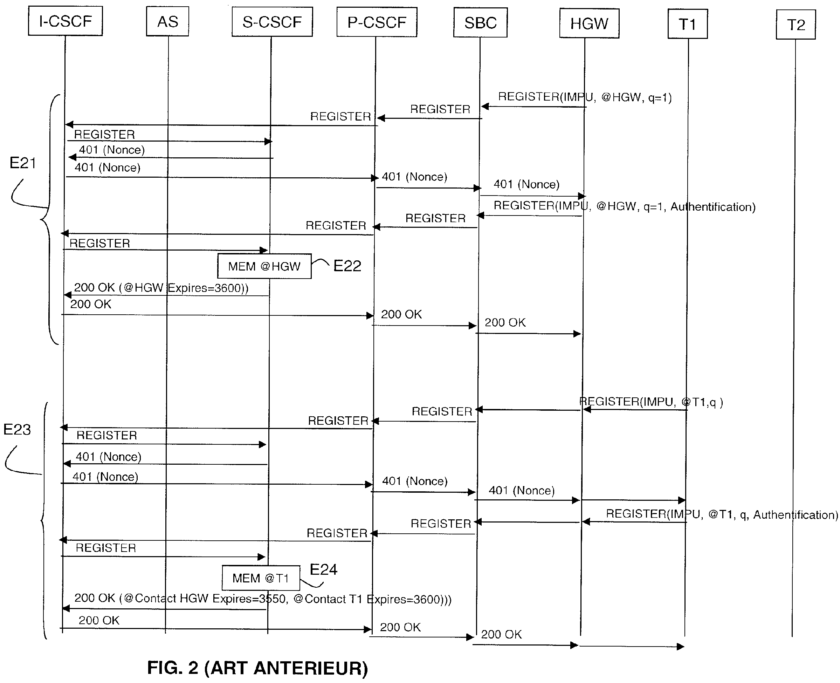

La **figure 2** représente le mécanisme d'enregistrement de la passerelle domestique HGW et du terminal T1 en coeur de réseau IMS.

Pour simplifier les figures, la fonction NAT de traduction d'adresses n'est pas représentée.

Au cours d'une étape E21, la passerelle domestique HGW s'enregistre, par l'envoi d'une requête REGISTER comportant l'identité publique IMPU de cette passerelle, son adresse de contact @HGW et le paramètre de priorisation q de priorité maximum.

Cette requête d'enregistrement est relayée, dans cet exemple, par une entité de contrôle de bordure SBC, et par les entités P-CSCF, I-CSCF, jusqu'à l'entité S-CSCF.

L'entité S-CSCF possède une interface vers le HSS (Home Subscriber Server), introduit en version 5 de l'UMTS, cette entité HSS contenant la base de données des abonnés IMS.

Après avoir authentifié la passerelle domestique HGW, l'entité S-CSCF mémorise au cours d'une étape E22 l'adresse de contact AoC @HGW de la passerelle domestique HGW, ainsi que la durée d'enregistrement restante correspondant au paramètre EXPIRES et, lorsque celui-ci est présent, le paramètre q de priorisation associé à la passerelle HGW.

On suppose que l'utilisateur a installé, dans le terminal T1, un logiciel de voix sur IP configuré avec la même identité publique IMPU que celle de la passerelle domestique HGW ainsi que les identifiants IMPI et password SIP utilisés pour l'authentification.

On notera que la présence de l'entité de bordure SBC est optionnelle.

Si l'entité de bordure SBC est présente, l'adresse de contact AoC de la passerelle domestique HGW (@HGW) correspond à l'adresse de l'entité de bordure côté réseau IMS complétée par un numéro de port et par un identifiant unique géré par cette entité de bordure SBC.

Si l'entité de bordure SBC est absente, l'adresse de contact AoC de la passerelle domestique HGW (@HGW) correspond à l'adresse IP de la passerelle HGW complétée par un numéro de port.

De la même façon, l'adresse de contact @T1 du terminal T1 correspond :
- à l'adresse de l'entité de bordure SBC côté réseau IMS complétée par un numéro de port et par un identifiant unique géré par l'entité SBC si l'entité SBC est présente ; ou
- à l'adresse IP de ce terminal T1 complétée par un numéro de port du terminal T1 si l'entité de bordure SBC est absente.

De retour à la figure 2, au cours d'une étape E23, on suppose que le terminal T1 s'enregistre en coeur de réseau IMS : l'adresse de contact AoC @T1, la durée d'enregistrement restante correspondant au paramètre EXPIRES et éventuellement le paramètre de priorisation q associé à l'adresse de contact de ce terminal T1 sont enregistrés au niveau de l'entité S-CSCF au cours d'une étape E24.

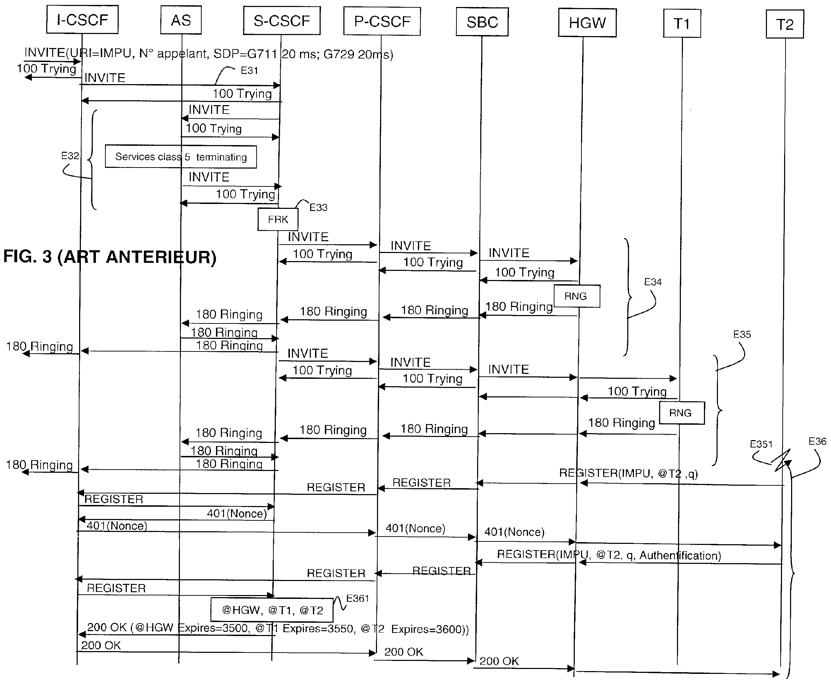

Le traitement d'un appel entrant destiné à l'identité publique IMPU selon l'état actuel de la technique est représenté à la **figure 3****.**

Lorsqu'un appel entrant destiné à l'identité publique IMPU est présenté au module I-CSCF (réception d'une requête INVITE), ce dernier interroge la base de données HSS pour obtenir l'adresse de l'entité S-CSCF sur laquelle est enregistrée au moins un terminal portant cette entité publique IMPU.

L'appel entrant (requête INVITE) est alors routé vers l'entité S-CSCF au cours d'une étape E31.

Les services Terminating sont gérés par le serveur d'application AS au cours d'une étape E32.

L'entité S-CSCF comporte un module MP de priorisation (module de Forking).

Dans le scénario décrit ici, étant donné que deux enregistrements correspondant à la même identité publique IMPU ont été effectués en coeur de réseau, l'entité S-CSCF active la fonction de priorisation (fonction de Forking IMS) au cours d'une étape E33.

Dans le scénario de la figure 3, il s'agit d'une présentation d'appel simultanée, l'appel étant présenté simultanément à la passerelle domestique HGW (étape générale E34) et au terminal T1 (étape générale E35) ; chacun des équipements HGW, T1 déclenche une sonnerie (étape RNG).

L'homme du métier comprendra que, en fonction des paramètres de priorisation q, l'appel peut être présenté de manière séquentielle aux équipements HGW et T1.

On suppose dans cet exemple que l'utilisateur est présent dans le réseau domestique au moment où le terminal DECT PH1 et le terminal T1 déclenchent leur sonnerie.

Dans le scénario décrit ici, le deuxième terminal T2 n'est pas encore enregistré en coeur de réseau IMS au moment de ces sonneries. On suppose alors que l'utilisateur décide d'enregistrer le deuxième terminal T2 en coeur du réseau (étape E351) lorsqu'il entend les sonneries et que cet enregistrement s'effectue normalement (étape E36).

L'entité S-CSCF mémorise les trois adresses de contact @HGW, @T1 et @T2 au cours d'une étape E361.

Malheureusement, le mécanisme de priorisation et de présentation d'appel ayant déjà été effectués (étape E33 déjà décrite), l'appel entrant ne peut être présenté au deuxième terminal T2.

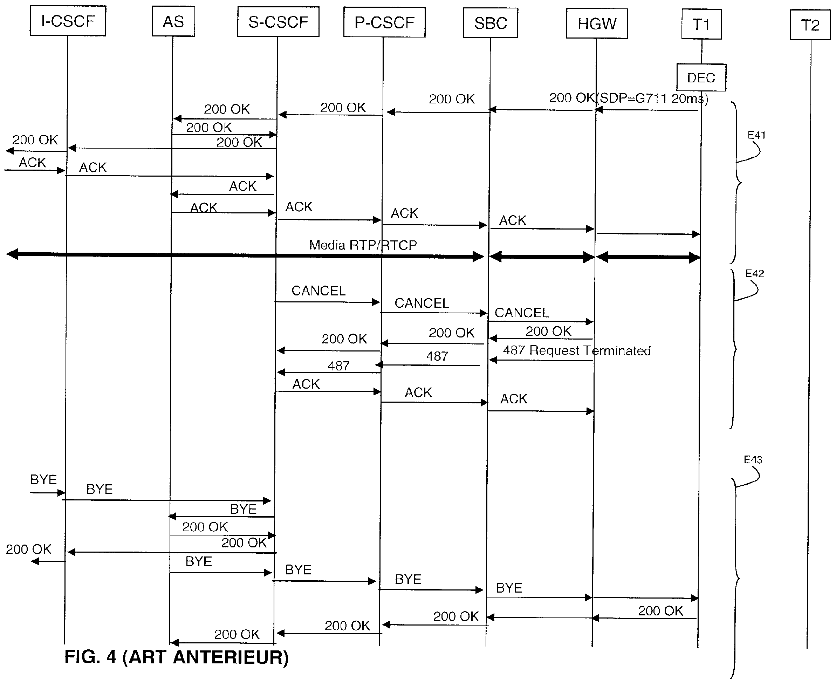

En référence à la **figure 4****,** on suppose que l'utilisateur accepte l'appel sur le premier terminal T1 (décrochage DEC du combiné puis étape de signalisation E41), ce qui entraine l'arrêt de la sonnerie sur le terminal PH1 attaché à la passerelle domestique HGW, la fonction de priorisation et de présentation d'appel (Forking) de l'entité S-CSCF prenant en charge l'annulation de la présentation d'appel entrant vers la passerelle par la séquence de message CANCEL, 200 OK, 487 Request Terminated ACK (étape E42).

Après la coupure du flux média, le terminal appelant libère la communication avec le premier terminal T1 au cours d'une étape générale E43.

L'invention vise une méthode pour permettre la prise d'un appel par un terminal, celui-ci s'enregistrant dans le réseau IMS après la mise en oeuvre de la fonction de priorisation et de présentation d'appel (Forking) par l'entité S-CSCF.

L'invention permet ainsi de prendre un appel sur un terminal non enregistré en coeur de réseau IMS par exemple, lorsque l'utilisateur est prévenu de cet appel par la sonnerie d'un autre terminal déjà enregistré en coeur du réseau IMS au moment de cet appel.

L'invention est particulièrement intéressante lorsque le deuxième terminal (le terminal non enregistré) est un terminal mono tache, à savoir un terminal ne possédant pas la capacité suffisante en termes de ressource énergétique ou de gestion multi-tâches pour rester en permanence attaché en coeur de réseau.

### Objet et résumé de l'invention

Plus précisément, l'invention concerne un procédé de présentation d'appel pouvant être mis en oeuvre par un serveur d'application placé en coupure de flux de signalisation entre une entité S-CSCF et au moins un premier terminal, ce procédé comportant :
- une étape de réception d'une requête de présentation d'un appel destinée au premier terminal ;
- une étape d'obtention de l'identité publique du premier terminal à partir de la requête ;
- une étape de détection de l'enregistrement, dans le réseau, d'un deuxième terminal ayant cette identité publique ; et
une étape d'envoi d'une requête de présentation de cet appel au deuxième terminal.

Corrélativement, l'invention concerne un serveur d'application dans un réseau IMS placé en coupure de flux de signalisation entre une entité S-CSCF et au moins un terminal, de manière à recevoir les requêtes de présentation d'appel destinées à ce terminal, ce serveur comportant :
- des moyens pour obtenir l'identité publique du terminal à partir de la requête ;
- des moyens pour détecter l'enregistrement dans le réseau d'un terminal ayant l'identité publique ; et
- des moyens pour envoyer une requête de présentation de cet appel au deuxième terminal.

Dans un mode particulier de réalisation de l'invention, ce serveur d'application est apte à mettre en oeuvre les fonctions Originating et/ou Terminating définies par la norme IMS du 3GPP.

Autrement dit, de façon originale, l'invention propose d'utiliser un serveur d'application IMS pour détecter les terminaux qui s'enregistrent dans le réseau avec une identité publique donnée et pour présenter, à ces terminaux, les appels entrants destinés aux autres terminaux déjà enregistrés dans le coeur de réseau IMS avec la même identité publique.

Cette solution est particulièrement avantageuse car elle ne retarde pas l'établissement de l'appel dans le réseau.

Par ailleurs elle ne nécessite aucune modification du coeur du réseau IMS, notamment au niveau des serveurs S-CSCF.

Dans un premier mode particulier de réalisation de l'invention l'étape de détection de l'enregistrement du deuxième terminal est effectuée en interrogeant régulièrement l'entité S-CSCF. Cette méthode de polling est simple à mettre en oeuvre et présente l'avantage de ne solliciter le serveur d'application AS et le serveur S-CSCF que pendant la phase d'établissement d'appel.

Cette interrogation peut par exemple comporter :
- l'envoi à l'entité S-CSCF, d'un message SIP REGISTER comportant l'identité publique, sans adresse de contact ; et
- la réception d'une réponse de l'entité S-CSCF, cette réponse comportant les adresses de contact de tous les terminaux enregistrés dans le réseau avec l'identité publique.

Dans un autre mode de réalisation, le serveur d'application AS utilise une souscription à un service de notification d'enregistrement de terminaux auprès du serveur S-CSCF. On peut par exemple utiliser le service de notification d'événements reg event, comme normalisé et décrit dans le document RFC 3680 « Event package for registration ».

Dans un autre mode de réalisation de l'invention, l'étape de détection de l'enregistrement du deuxième terminal est effectuée sur réception d'un message de prolongation de l'enregistrement du deuxième terminal en mode Third Party Registration.

La requête de présentation d'appel envoyée au deuxième terminal est par exemple un message SIP INVITE comportant dans la requête URI SIP l'adresse de contact de ce deuxième terminal et non pas l'identité publique IMPU.

Dans un mode préféré de réalisation de l'invention, le procédé de présentation d'appel comporte :
- une étape de détection de la prise de l'appel par le deuxième terminal; et
- une étape d'envoi d'un message à l'entité S-CSCF afin qu'elle annule la présentation de l'appel vers le au moins un premier terminal.

Cette caractéristique permet avantageusement d'arrêter de faire sonner les autres terminaux après la prise de l'appel par le deuxième terminal.

Le message envoyé à l'entité S-CSCF est par exemple un message SIP CANCEL comportant l'identité publique.

Dans un mode préféré de réalisation de l'invention le procédé de présentation d'appel comporte :
- une étape de détection de la prise de l'appel par le premier terminal ; et
- une étape d'envoi d'un message au deuxième terminal pour annuler la présentation de ce deuxième terminal.

Cette caractéristique permet avantageusement d'arrêter de faire sonner le deuxième terminal lorsqu'un premier terminal a pris l'appel.

Le message envoyé au deuxième terminal est par exemple un message SIP CANCEL comportant son adresse de contact.

De même, dans un mode particulier de réalisation de l'invention, les différentes étapes du procédé de présentation d'appel sont déterminées par les instructions d'un programme d'ordinateur.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre des étapes de présentation d'un appel tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des figures

D'autres caractéristiques et avantages de l'invention ressortiront de la description faite ci-dessous en référence aux dessins annexés qui en illustrent un exemple de réalisation dépourvu de tout caractère limitatif.

Sur les figures :
- la figure 1 déjà décrite représente un réseau de télécommunication dans lequel peut s'appliquer l'invention ;
- les figures 2 à 4 déjà décrites représentent un mécanisme d'enregistrement et de présentation d'appel conforme à l'état de la technique ;
- la figure 5 représente de façon schématique un serveur d'application conforme à l'invention ; et
- les figures 6A et 7 à 10 représentent, sous forme d'organigramme, les principales étapes d'un procédé de présentation d'appel conforme à un premier mode de réalisation de l'invention ; et
- les figues 6B et 11 à 13 représentent, sous forme d'organigramme, les principales étapes d'un procédé de présentation d'appel conforme à un deuxième mode de réalisation de l'invention.

### Description détaillée de l'invention

La **figure 5** représente un serveur d'application AS conforme à un mode particulier de réalisation de l'invention. Dans l'exemple de réalisation décrit ici, ce serveur d'application a l'architecture matérielle d'un ordinateur conventionnel. Il comporte un processeur 101, une mémoire morte de type ROM 102, une mémoire vive de type RAM 103 et des moyens 104 de communication sur le réseau IMS RO.

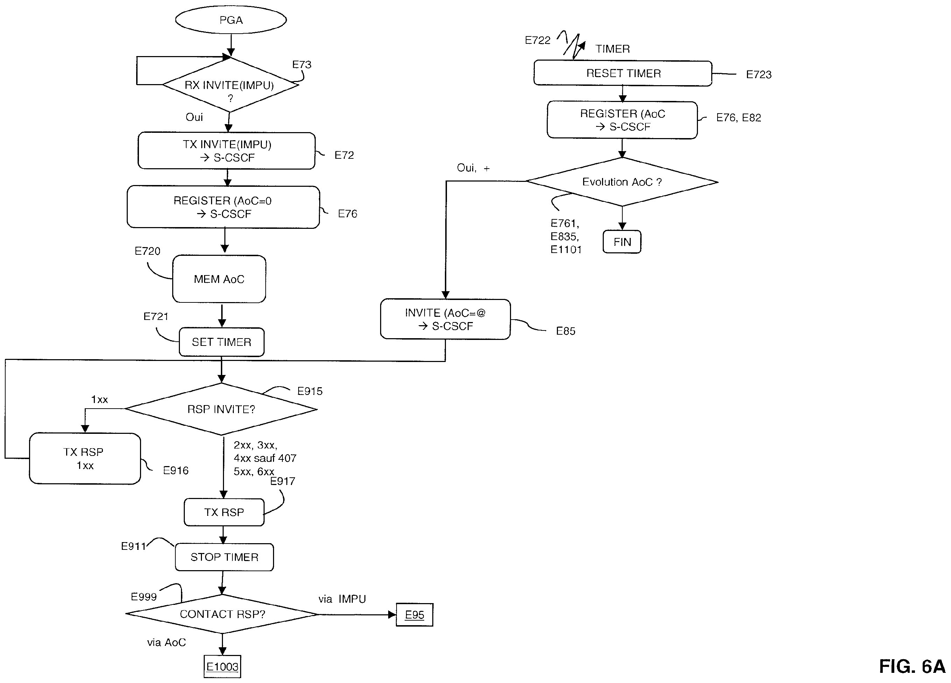

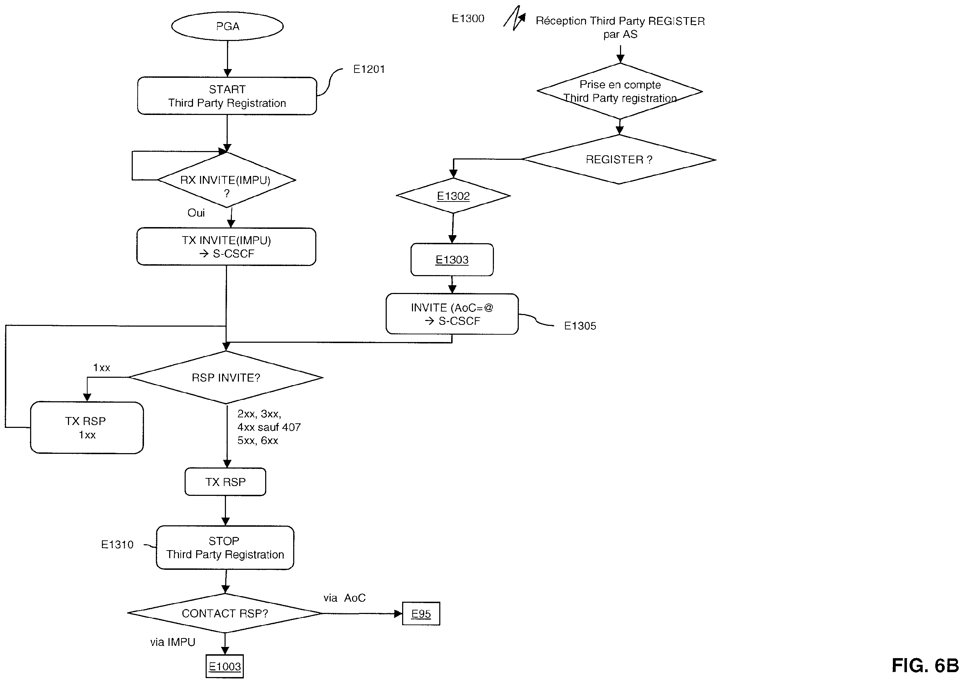

La mémoire morte 102 constitue un support d'enregistrement conforme à l'invention dans lequel est enregistré un programme d'ordinateur conforme à l'invention et dont les principales étapes sont représentées sous forme d'organigramme, dans deux variantes PGA, PGB de réalisation de l'invention, en référence aux figures 6A et 6B respectivement.

En référence aux figures **6A** **et** **7 à 10****,** nous allons maintenant décrire en détails une première variante de mise en oeuvre de l'invention.

D'une façon générale, dans cette première variante, le serveur d'application AS selon l'invention interroge régulièrement, pendant la phase de présentation d'appel, l'entité S-CSCF, pour déterminer si un terminal ayant l'identité publique IMPU s'est enregistré ou désenregistré du coeur de réseau IMS depuis la réception du message INVITE d'initialisation d'appel par ce serveur d'application AS.

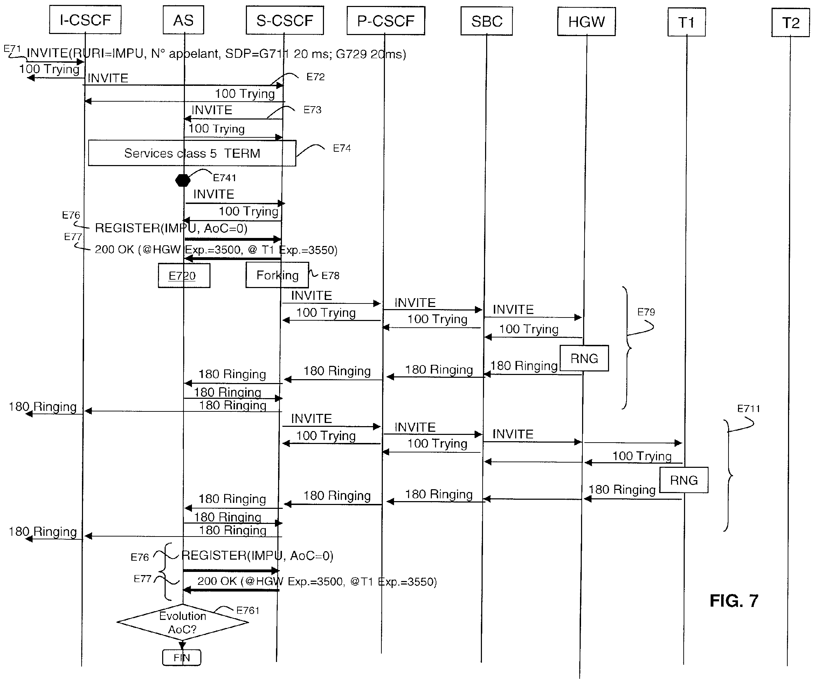

En référence à la **figure 7****,** on suppose que l'entité I-CSCF reçoit (étape E71) une requête d'initialisation d'appel INVITE comportant une identité publique IMPU et qu'elle détermine, comme de façon connue, l'entité S-CSCF gérant au moins un terminal portant cette identité IMPU.

L'entité I-CSCF redirige la requête d'invitation d'appel INVITE vers cette entité S-CSCF au cours d'une étape E72. Comme de façon connue, l'entité S-CSCF redirige le flux de signalisation vers le serveur d'application AS, celui-ci mettant en oeuvre les services Terminating.

Cette requête INVITE est reçue par le serveur d'application AS au cours d'une étape E73.

Le serveur d'application AS traite ensuite tout ou partie des services Terminating au cours d'une étape E74.

Conformément à cette première variante de réalisation de l'invention, le serveur d'application AS démarre, au cours d'une étape E741, une phase d'interrogation de l'entité S-CSCF (phase de polling) afin de déterminer les terminaux enregistrés en coeur de réseau IMS et comportant l'entité IMPU reçue dans la requête INVITE.

Dans cette variante de réalisation, cette interrogation ou polling est effectuée en envoyant (étape E76) au serveur S-CSCF un message SIP REGISTER comportant l'adresse IMPU, mais sans adresse de contact (AoC=0).

En réponse à l'envoi de ce message REGISTER, le serveur d'application AS reçoit, au cours d'une étape E77, une réponse de type 200 OK comportant les adresses de contact @HGW, @T1 des terminaux HGW, T1 enregistrés dans le réseau IMS avec l'identité IMPU, et pour chacune de ces adresses, une valeur du champ EXPIRES et du paramètre q de priorisation si ce dernier est disponible.

Dans l'exemple décrit ici, la passerelle HGW et le premier terminal T1 sont enregistrés.

Au cours d'une étape E720, le serveur d'application AS enregistre ces deux adresses de contact dans sa mémoire vive 103.

En parallèle, comme décrit précédemment, l'entité S-CSCF met en oeuvre une fonction de priorisation (E78) pour présenter l'appel à la passerelle HGW (étape E79) puis au premier terminal T1 (étape E711).

Dans l'exemple de réalisation décrit ici, l'interrogation (ou polling) de l'entité S-CSCF se fait régulièrement, sur expiration d'un compte à rebours ou « timer » (étape E722), ce compte à rebours étant activé la première fois au cours d'une étape E721 effectuée juste après la sauvegarde des adresses de contact dans une mémoire vive 103 du serveur d'application AS (étape E720) puis (étape E723) à chaque expiration de ce compte à rebours (étape E722).

Autrement dit, le serveur d'application AS réémet régulièrement le message SIP REGISTER (étapes E76), celui-ci comportant l'identité IMPU mais pas d'adresse de contact vers l'entité S-CSCF et vérifie (étape E761) s'il y a évolution du nombre d'adresses de contact portant l'identité IMPU par rapport à celles qui ont été mémorisées à l'étape E720.

Dans le scénario de la figure 7, il n'y a pas d'évolution de ce nombre d'adresses et donc aucun traitement spécifique par le serveur d'application AS (résultat du test E761 = NON).

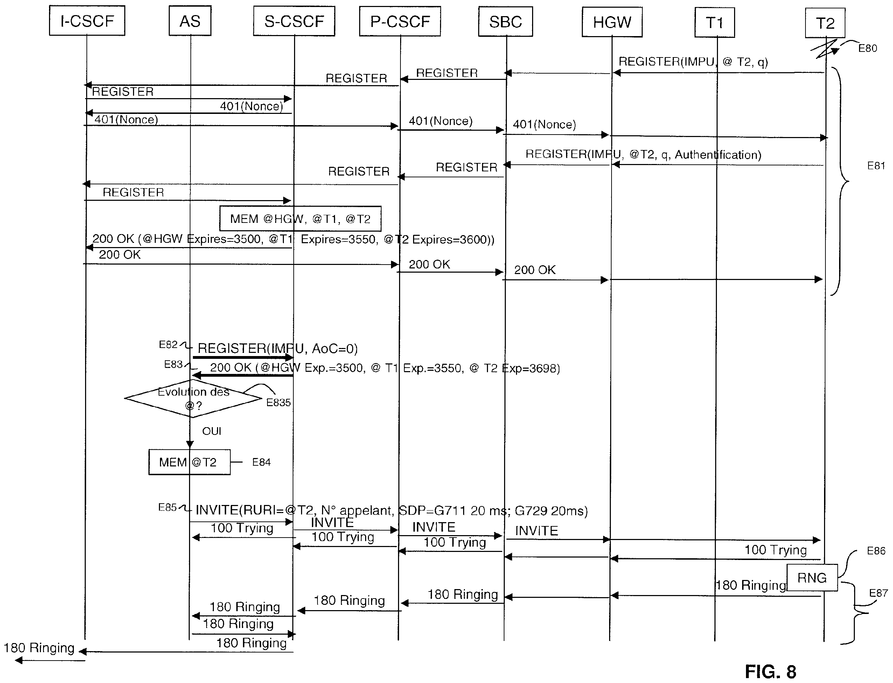

En référence aux figures 8 et 6A, on suppose maintenant que l'utilisateur entend sonner le terminal PH1 attaché à la passerelle HGW et/ou le premier terminal T1 et qu'il active l'application de voix sur IP du deuxième terminal T2 (étape E80, figure 8).

L'activation de l'application voix sur IP entraîne, comme représenté à la figure 8, l'enregistrement du terminal T2 en coeur de réseau (étape générale E81).

Le serveur d'application AS détecte (étape E835) l'enregistrement du deuxième terminal T2 dans le réseau IMS, puisque la réponse 200 OK reçue à l'étape E83 en réponse à la requête d'enregistrement REGISTER envoyée à l'étape E82, comporte une adresse de contact supplémentaire (branche « oui+ », fig. 6A) à savoir l'adresse de contact @T2 du terminal T2.

Dans le mode de réalisation décrit ici, le serveur d'application AS mémorise cette nouvelle adresse de contact dans sa mémoire vive 103 au cours d'une étape E84.

Conformément à l'invention, le serveur d'application AS envoie ensuite, de sa propre initiative, au cours d'une étape E85, un message SIP INVITE à destination du terminal T2, le champ REQUEST URI (RURI) de ce message comportant l'adresse de contact @T2 du terminal T2 et non pas l'identifiant publique IMPU.

En effet, l'homme du métier comprendra que si ce message comportait l'IMPU, cela entraînerait à nouveau la mise en oeuvre du mécanisme de priorisation et de présentation d'appel par l'entité S-CSCF vers l'ensemble des terminaux enregistrés.

Le terminal T2 commence à sonner (étape E86) et le code 180 RINGING est transmis vers l'appelant (étape E87).

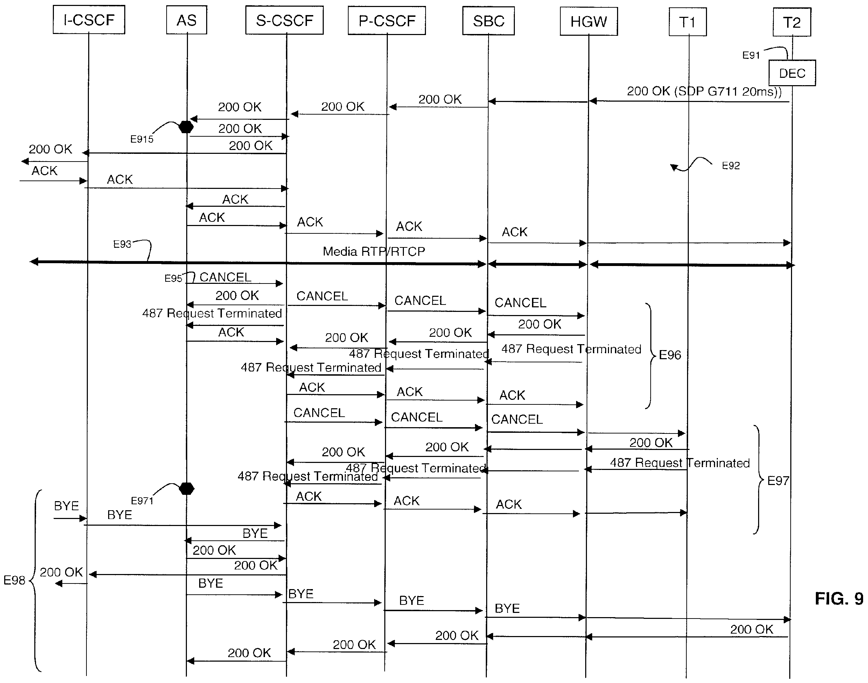

En référence à la **figure 9****,** nous supposerons que l'utilisateur prend l'appel (décrochage) avec le terminal T2 (étape E91).

Les messages de signalisation 200 OK remontent alors vers le serveur d'application AS selon l'invention (étape E92) et un flux média est établi entre l'appelant et le terminal T2 (étape E93).

Le serveur d'application détecte (étape E915) la prise d'appel par le terminal T2.

Dans ce mode particulier de réalisation de l'invention, le serveur d'application AS, envoie, au cours d'une étape E95, un message CANCEL (IMPU) à destination de l'entité S-CSCF afin que, cette entité S-CSCF annule la présentation vers la passerelle HGW et vers le premier terminal T1 (étapes E96 et E97) pour qu'ils arrêtent de sonner.

En parallèle, le serveur d'application AS arrête (étape E971) la séquence de polling démarrée à l'étape E741 et libère le contexte d'adresse de contact sauvegardé dans la mémoire vive 103.

Puis l'appel est libéré de manière standard par l'appelant au cours d'une étape E98.

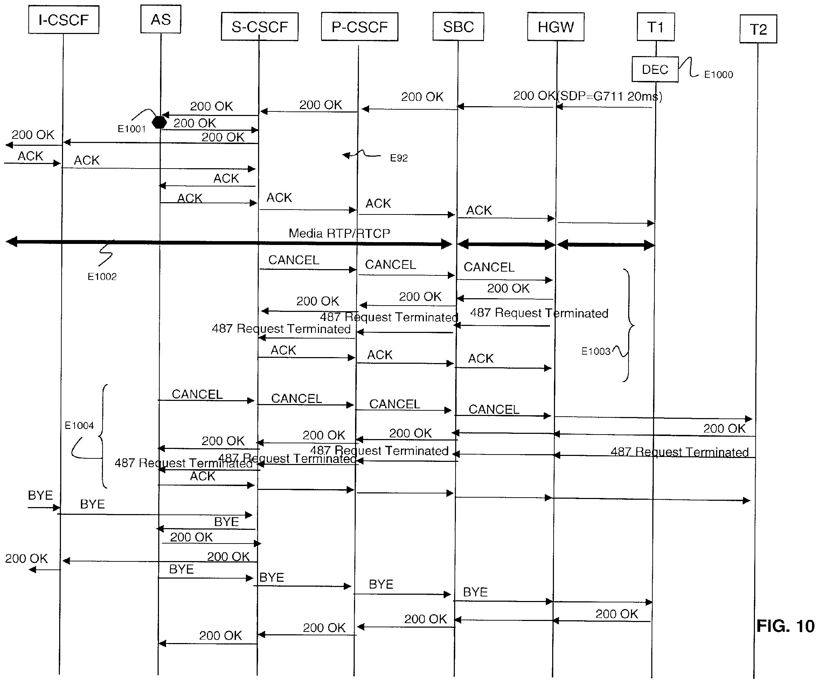

La **figure 10** illustre le même scénario dans le cas où c'est le terminal T1 qui décroche (étape E1000), un flux média étant établi (étape E1002) entre l'appelant et le terminal T1.

La détection de cette prise d'appel est effectuée par le serveur AS au cours d'une étape E1001.

Dans ce cas, l'entité S-CSCF est apte, par elle-même, comme de façon connue, à annuler l'appel vers la passerelle HGW par la mise en oeuvre de sa fonction de priorisation (Forking) au cours d'une étape E1003.

Conformément à cet aspect particulier de l'invention, l'entité du serveur d'application AS annule, au cours d'une étape E1004, la présentation d'appel au deuxième terminal T2 dès réception de la réponse 200 OK représentative de la prise d'appel par le premier terminal T1.

Dans le mode de réalisation décrit ici, cette annulation s'effectue en envoyant un message SIP CANCEL au deuxième terminal T2 dont le champ REQUEST URI (RURI) contient l'adresse de contact @T2 du terminal T2.

De retour à la figure 6A, lorsque le serveur d'application AS reçoit une réponse au message INVITE (étape E915), il détermine s'il s'agit d'une réponse provisoire (étape E916), auquel cas ce message est relayé vers l'amont de façon classique.

Si la réponse au message INVITE est une réponse de type 2XX, 3XX, 4XX sauf 407, 5XX ou 6XX, le serveur d'application AS remonte la réponse finale vers l'amont (étape E917) puis il arrête (étape E911) le compte à rebours réarmé à l'étape E723.

Puis, le serveur d'application AS, détermine (étape E999) si l'appel a été pris par un terminal contacté par le serveur d'application lui-même ou par l'entité S-CSCF.

Ensuite, le serveur d'application AS annule les différentes présentations d'appel :
- soit directement par l'envoi (étape E1003) d'un message CANCEL comportant l'adresse de Contact du terminal, pour les terminaux qu'il a lui-même directement sollicités (branche via AoC, fig. 6A) ;
- soit, par l'envoi (étape E95) d'une requête d'un message CANCEL (IMPU) à destination de l'entité S-CSCF pour que cette entité annule elle-même les legs d'appel vers les terminaux qu'elle a elle-même sollicités pendant l'étape de priorisation (branche via IMPU).

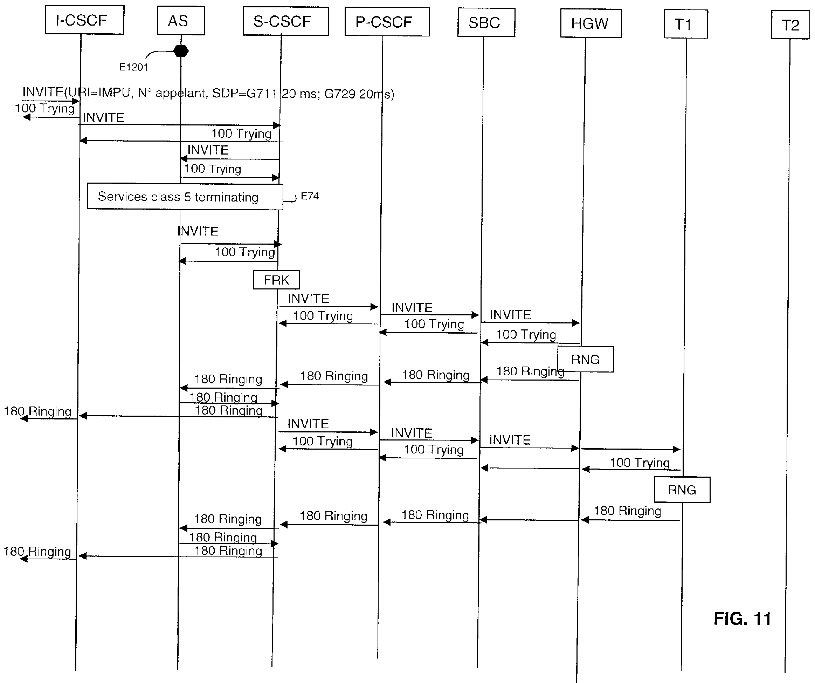

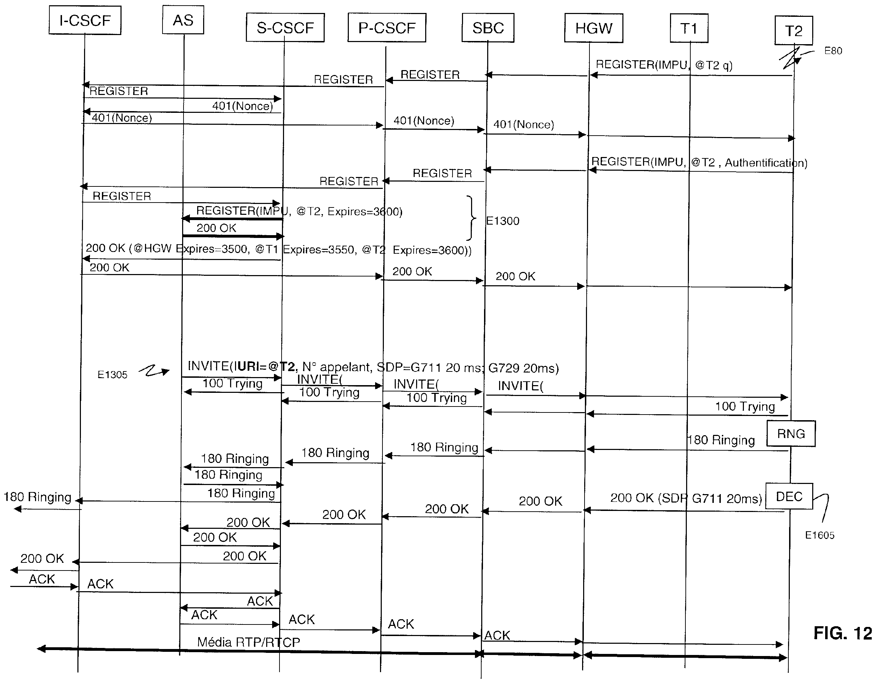

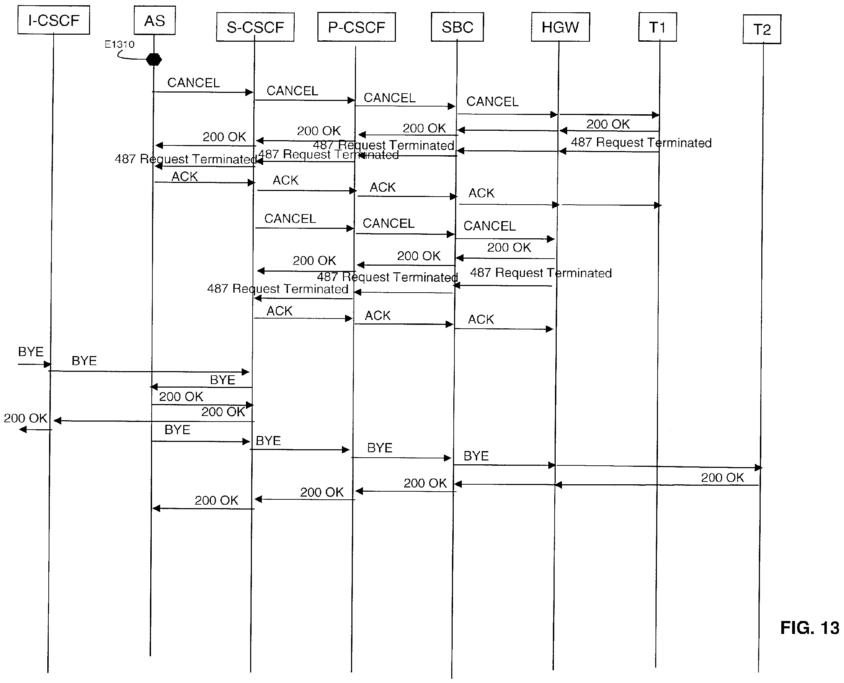

Les **figures 6B** et 11 à 13 illustrent une deuxième variante de réalisation de l'invention mise en oeuvre par un programme d'ordinateur PGB conforme à l'invention dans laquelle le serveur d'application AS ne met pas en oeuvre une méthode de polling, la détection de l'enregistrement ou du désenregistrement d'un terminal dans le réseau IMS s'effectuant par la mise en oeuvre du mécanisme Third Party Registration. Dans ces figures, seules les étapes propres à cette deuxième variante de réalisation seront détaillées, les autres étapes ayant déjà été décrites en référence aux figures précédentes.

Dans ce mécanisme, le S-CSCF est configuré pour relayer les messages REGISTER vers le serveur AS (étape E1201) via le système de trigger défini dans le modèle IMS. On rappelle que le système de trigger permet de déclencher des services sur des serveurs d'application AS, lorsque le critère correspondant est défini dans le profil de services du client au niveau du HSS (Initial Filter Criteria).

Après l'enregistrement du terminal T2 en coeur de réseau IMS, l'entité S-CSCF prolonge cet enregistrement en mode Third Party Registration (étape E1300) jusqu'au serveur d'application AS.

Ce dernier présente alors l'appel vers ce nouveau terminal T2 (étape E1305) en utilisant son adresse de contact @T2 dans le champ REQUEST URI du message INVITE.

Préférentiellement, le serveur AS vérifie auparavant, au cours de cette même étape E1302 que ce terminal n'a pas déjà été contacté, et mémorise à cet effet (étape E1303) l'adresse du contact AoC de tout terminal qu'il contacte.

La procédure de prise en compte de Third Party Registration est arrêtée (étape E1310) sur réception d'une réponse finale à l'envoi de la requête INVITE, avant la libération des présentations d'appel. La procédure Third Party Registration s'exécute en permanence qu'il y ait ou non un appel: le mécanisme est lié au triggering IMS....

## Revendications

1. Procédé de présentation d'appel pouvant être mis en oeuvre par un serveur d'application (AS) placé en coupure des flux de signalisation entre un premier terminal (HGW, T1) et une entité S-CSCF gérant ce premier terminal comportant :
- une étape de réception d'une requête de présentation d'appel INVITE destinée audit au moins un premier terminal ;
- le procédé étant **caractérisé en ce qu'**il comporte
- une étape d'obtention de l'identité publique (IMPU) dudit premier terminal (HGW, T1) à partir de ladite requête ;
- une étape (E835) de détection de l'enregistrement, dans ledit réseau, d'un deuxième terminal (T2) ayant ladite identité publique ; et
- une étape (E85) d'envoi d'une requête de présentation dudit appel audit deuxième terminal (T2).

2. Procédé selon la revendication 1 **caractérisé en ce que** ladite étape de détection de l'enregistrement du deuxième terminal est effectuée en interrogeant régulièrement ladite entité S-CSCF.

3. Procédé selon la revendication 2 **caractérisé en ce que** ladite interrogation comporte :
- l'envoi (E76), à ladite entité S-CSCF d'un message SIP comportant ladite identité publique, sans adresse de contact ; et
- la réception (E77) d'une réponse de ladite entité S-CSCF, cette réponse comportant les adresses de contact de tous les terminaux (HGW, T1) enregistrés dans ledit réseau avec ladite identité publique.

4. Procédé selon la revendication 1, **caractérisé en ce que** ladite étape de détection de l'enregistrement du deuxième terminal est effectuée sur réception (E1300) d'un message de prolongation de l'enregistrement dudit deuxième terminal (T2) en mode Third Party Registration.

5. Procédé selon l'une quelconque des revendications 1 à 4 **caractérisé en ce que** ladite requête de présentation d'appel envoyée (E85) audit deuxième terminal est un message SIP INVITE comportant l'adresse de contact (@T2) dudit deuxième terminal (T2).

6. Procédé selon l'une quelconque des revendications 1 à 5, **caractérisé en ce qu'**il comporte :
- une étape (E915) de détection de la prise dudit appel par ledit deuxième terminal (T2) ; et
- une étape (E95) d'envoi d'un message à ladite entité S-CSCF afin qu'elle annule la présentation dudit appel vers ledit au moins un premier terminal (HGW, T1).

7. Procédé selon la revendication 6, **caractérisé en ce que** ledit message envoyé (E95) à ladite entité S-CSCF est un message SIP CANCEL comportant ladite identité publique (IMPU).

8. Procédé selon l'une quelconque des revendications 1 à 7 **caractérisé en ce qu'**il comporte :
- une étape (E1001) de détection de la prise dudit appel par ledit premier terminal (T1) ; et
- une étape (E1003) d'envoi d'un message audit deuxième terminal pour annuler la présentation de cet appel audit deuxième terminal.

9. Procédé selon la revendication 8 **caractérisé en ce que** ledit message envoyé (E1003) audit deuxième terminal est un message SIP CANCEL comportant l'adresse de contact (@T2) dudit deuxième terminal (T2).

10. Serveur d'application (AS) dans un réseau IMS placé en coupure de flux de signalisation entre un premier terminal (HGW, T1) et une entité S-CSCF gérant ce premier terminal de manière à recevoir les requêtes de présentation d'appel INVITE destinées à ce terminal, ce serveur comportant :
- des moyens pour obtenir l'identité publique (IMPU) dudit terminal à partir de ladite requête ;
- ledit serveur étant **caractérisé en ce qu'**il comporte
- des moyens pour détecter l'enregistrement dans ledit réseau d'un terminal (T2) ayant ladite identité publique ; et
- des moyens pour envoyer une requête de présentation dudit appel audit deuxième terminal (T2).

11. Serveur d'application selon la revendication 10, **caractérisé en ce qu'**il est apte à mettre en oeuvre la fonction Terminating définie par la norme IMS du 3GPP.

12. Programme d'ordinateur (PGA, PGB) comportant des instructions pour la mise en oeuvre d'un procédé de présentation d'appel selon l'une quelconque des revendications 1 à 9 lorsque ce programme est exécuté par un ordinateur.

13. Support d'enregistrement (102) lisible par un ordinateur sur lequel est enregistré un programme d'ordinateur comprenant des instructions pour l'exécution des étapes d'un procédé de présentation d'appel selon l'une quelconque des revendications 1 à 9.

## Patentansprüche

1. Anrufanzeigeverfahren, das von einem Anwendungsserver (AS) angewendet werden kann, der in Unterbrechung der Signalisierungsflüsse zwischen einem ersten Endgerät (HGW, T1) und einer dieses erste Endgerät verwaltenden S-CSCF-Entität angeordnet ist, das aufweist:
- einen Schritt des Empfangs einer Anrufanzeigeanforderung INVITE, die für das mindestens eine erste Endgerät bestimmt ist;
wobei das Verfahren **dadurch gekennzeichnet, dass** es aufweist
- einen Schritt des Erhalts der öffentlichen Identität (IMPU) des ersten Endgeräts (HGW, T1) ausgehend von der Anforderung;
- einen Schritt (E835) der Erfassung der Registrierung, in dem Netz, eines zweiten Endgeräts (T2), das die öffentliche Identität hat; und
- einen Schritt (E85) des Sendens einer Anzeigeanforderung des Anrufs an das zweite Endgerät (T2).

2. Verfahren nach Anspruch 1, **dadurch gekennzeichnet, dass** der Schritt der Erfassung der Registrierung des zweiten Endgeräts durchgeführt wird, indem die S-CSCF-Entität regelmäßig abgefragt wird.

3. Verfahren nach Anspruch 2, **dadurch gekennzeichnet, dass** die Abfrage aufweist:
- das Senden (E76) an die S-CSCF-Entität einer SIP-Nachricht, die die öffentliche Identität aufweist, ohne Kontaktadresse; und
- den Empfang (E77) einer Antwort von der S-CSCF-Entität, wobei diese Antwort die Kontaktadressen aller Endgeräte (HGW, T1) aufweist, die in dem Netz mit der öffentlichen Identität registriert sind.

4. Verfahren nach Anspruch 1, **dadurch gekennzeichnet, dass** der Schritt der Erfassung der Registrierung des zweiten Endgeräts bei Empfang (E1300) einer Verlängerungsnachricht der Registrierung des zweiten Endgeräts (T2) im Modus Third Party Registration ausgeführt wird.

5. Verfahren nach einem der Ansprüche 1 bis 4, **dadurch gekennzeichnet, dass** die an das zweite Endgerät gesendete Anrufanzeigeanforderung (E85) eine SIP-Nachricht INVITE ist, die die Kontaktadresse (@T2) des zweiten Endgeräts (T2) aufweist.

6. Verfahren nach einem der Ansprüche 1 bis 5, **dadurch gekennzeichnet, dass** es aufweist:
- einen Schritt (E915) der Erfassung der Annahme des Anrufs durch das zweite Endgerät (T2); und
- einen Schritt (E95) des Sendens einer Nachricht an die S-CSCF-Entität, damit sie die Anzeige des Anrufs an das mindestens eine Endgerät (HGW, T1) abbricht.

7. Verfahren nach Anspruch 6, **dadurch gekennzeichnet, dass** die an die S-CSCF-Entität gesendete Nachricht (E95) eine SIP-Nachricht CANCEL ist, die die öffentliche Identität (IMPU) aufweist.

8. Verfahren nach einem der Ansprüche 1 bis 7, **dadurch gekennzeichnet, dass** es aufweist:
- einen Schritt (E1001) der Annahme des Anrufs durch das erste Endgerät (T1); und
- einen Schritt (E1003) des Sendens einer Nachricht an das zweite Endgerät, um die Anzeige dieses Anrufs an das zweite Endgerät abzubrechen.

9. Verfahren nach Anspruch 8, **dadurch gekennzeichnet, dass** die an das zweite Endgerät gesendete Nachricht (E1003) eine SIP-Nachricht CANCEL ist, die die Kontaktadresse (@T2) des zweiten Endgeräts (T2) aufweist.

10. Anwendungsserver (AS) in einem IMS-Netz, der in Unterbrechung eines Signalisierungsflusses zwischen einem ersten Endgerät (HGW, T1) und einer S-CSCF-Entität angeordnet ist, die dieses erste Endgerät verwaltet, um die Anrufanzeigeanforderungen INVITE zu empfangen, die für dieses Endgerät bestimmt sind, wobei dieser Server aufweist:
- Einrichtungen zum Erhalt der öffentlichen Identität (IMPU) des Endgeräts ausgehend von der Anforderung;
wobei der Server **dadurch gekennzeichnet ist, dass** er aufweist
- Einrichtungen zur Erfassung der Registrierung in dem Netz eines Endgeräts (T2), das die öffentliche Identität hat; und
- Einrichtungen, um eine Anzeigeanforderung des Anrufs an das zweite Endgerät (T2) zu senden.

11. Anwendungsserver nach Anspruch 10, **dadurch gekennzeichnet, dass** er fähig ist, die von der Norm IMS des 3GPP definierte Funktion Terminating durchzuführen.

12. Computerprogramm (PGA, PGB), das Anweisungen zur Durchführung eines Verfahrens der Anrufanzeige nach einem der Ansprüche 1 bis 9 aufweist, wenn dieses Programm von einem Computer ausgeführt wird.

13. Computerlesbarer Aufzeichnungsträger (102), auf dem ein Computerprogramm aufgezeichnet ist, das Anweisungen zur Ausführung der Schritte eines Anrufanzeigeverfahrens nach einem der Ansprüche 1 bis 9 enthält.

## Claims

1. Method of call presentation that can be implemented by an application server (AS) spliced into the signalling streams between a first terminal (HGW, T1) and an S-CSCF entity managing this first terminal comprising:
- a step of receiving a call presentation request INVITE intended for said at least one first terminal;
- the method being **characterized in that** it comprises
- a step of obtaining the public identity (IMPU) of said first terminal (HGW, T1) on the basis of said request;
- a step (E835) of detecting the registration, in said network, of a second terminal (T2) having said public identity; and
- a step (E85) of dispatching a request for presentation of said call to said second terminal (T2).

2. Method according to Claim 1, **characterized in that** said step of detecting the registration of the second terminal is performed by regularly interrogating said S-CSCF entity.

3. Method according to Claim 2, **characterized in that** said interrogation comprises:
- the dispatching (E76), to said S-CSCF entity, of an SIP message comprising said public identity, without contact address; and
- the reception (E77) of a response from said S-CSCF entity, this response comprising the contact addresses of all the terminals (HGW, T1) registered in said network with said public identity.

4. Method according to Claim 1, **characterized in that** said step of detecting the registration of the second terminal is performed on reception (E1300) of a message of prolongation of the registration of said second terminal (T2) in Third Party Registration mode.

5. Method according to any one of Claims 1 to 4, **characterized in that** said call presentation request dispatched (E85) to said second terminal is an INVITE SIP message comprising the contact address (@T2) of said second terminal (T2).

6. Method according to any one of Claims 1 to 5, **characterized in that** it comprises:
- a step (E915) of detecting the pick-up of said call by said second terminal (T2); and
- a step (E95) of dispatching a message to said S-CSCF entity so that it cancels the presentation of said call to said at least one first terminal (HGW, T1).

7. Method according to Claim 6, **characterized in that** said message dispatched (E95) to said S-CSCF entity is a CANCEL SIP message comprising said public identity (IMPU).

8. Method according to any one of Claims 1 to 7, **characterized in that** it comprises:
- a step (E1001) of detecting the pick-up of said call by said first terminal (T1); and
- a step (E1003) of dispatching a message to said second terminal to cancel the presentation of this call to said second terminal.

9. Method according to Claim 8, **characterized in that** said message dispatched (E1003) to said second terminal is a CANCEL SIP message comprising the contact address (@T2) of said second terminal (T2).

10. Application server (AS) in an IMS network spliced into the signalling stream between a first terminal (HGW, T1) and an S-CSCF entity managing this first terminal so as to receive the call presentation requests INVITE intended for this terminal, this server comprising:
- means for obtaining the public identity (IMPU) of said terminal on the basis of said request;
- said server being **characterized in that** it comprises
- means for detecting the registration in said network of a terminal (T2) having said public identity; and
- means for dispatching a request for presentation of said call to said second terminal (T2).

11. Application server according to Claim 10, **characterized in that** it is able to implement the Terminating function defined by the IMS standard of the 3GPP.

12. Computer program (PGA, PGB) comprising instructions for the implementation of a method of call presentation according to any one of Claims 1 to 9 when this program is executed by a computer.

13. Recording medium (102) readable by a computer on which is recorded a computer program comprising instructions for the execution of the steps of a method of call presentation according to any one of Claims 1 to 9.
